# EUROPEAN PATENT APPLICATION

(11) **EP 4 826 873 A1**
(43) Date of publication of application: **21.10.2026**
(21) Application number: 24906120.1
(22) Date of filing: 05.12.2024
(51) Int. Cl.: H01M 50/244, H01M 50/233

(54) **ENERGY STORAGE CONTAINER AND ENERGY STORAGE SYSTEM**

(30) Priority: 22.12.2023 CN 202323528309 U
(71) Applicant: Contemporary Amperex Technology Co., Limited, Ningde, Fujian 352100 (CN)
(72) Inventor: TONG, Yiting, Ningde, Fujian 352100 (CN); HE, Shuangjiang, Ningde, Fujian 352100 (CN); ZHANG, Xuefang, Ningde, Fujian 352100 (CN); SU, Haibin, Ningde, Fujian 352100 (CN); WU, Kai, Ningde, Fujian 352100 (CN); LI, Zhonghong, Ningde, Fujian 352100 (CN)
(74) Representative: Gong, Jinping
(86) International application number: PCT/CN2024/137066
(87) International publication number: WO 2025/130636

(57) **Abstract**

Disclosed are an energy storage container (100) and an energy storage system (1000). The energy storage container (100) includes a container body (10). A battery compartment (20), an electrical compartment (30), and a liquid cooling unit (40) are disposed inside the container body (10); the electrical compartment (30) and the liquid cooling unit (40) are disposed on the same end side of the battery compartment (20) in a first direction (O). Such a configuration can effectively improve the space utilization rate of the energy storage container (100); additionally, working personnel can inspect the electrical compartment (30) and the liquid cooling unit (40) on the same end side of the energy storage container (100), thereby effectively improving the convenience of on-site maintenance.

## Description

The present application refers to the Chinese Patent Application No. 202323528309.1 entitled "ENERGY STORAGE CONTAINER AND ENERGY STORAGE SYSTEM", filed on December 22, 2023, which is incorporated herein by reference in its entirety.

### TECHNICAL FIELD

The present application relates to the technical field of energy storage systems, and in particular, to an energy storage container and an energy storage system.

### BACKGROUND

With the continuous development of new energy technologies, various technologies related to energy storage are also continuously upgrading; among the various technologies, energy storage containers using a container as an energy storage method have been widely applied. The energy storage container includes various module devices accommodated in the container body, such as energy storage modules (e.g., battery clusters, batteries, and battery cells), liquid cooling devices, fire protection devices, power distribution modules, and signal and power supply module boxes. Therefore, how to reasonably lay out the internal space of the energy storage container is particularly crucial.

### SUMMARY

An objective of embodiments of the present application is to provide an energy storage container and an energy storage system, aiming to address the issue regarding the reasonableness of the internal layout of the energy storage container.

To achieve the above objective, the embodiments of the present application adopt the following technical solutions:

In a first aspect, the embodiments of the present application provide an energy storage container. The energy storage container includes a container body. A battery compartment, an electrical compartment, and a liquid cooling unit are disposed inside the container body; the electrical compartment and the liquid cooling unit are disposed on a same end side of the battery compartment in a first direction.

The beneficial effects of the embodiments of the present application are as follows: In the energy storage container according to the embodiments of the present application, the electrical compartment and the liquid cooling unit are disposed on the same side of the battery compartment in the first direction, such that the space utilization rate of the container can be effectively improved. Additionally, working personnel can inspect the electrical compartment and the liquid cooling unit on the same end side of the energy storage container, thereby effectively improving the convenience of on-site maintenance. Moreover, when mounting and configuring the energy storage container, the layout mode in which the electrical compartment and the liquid cooling unit are located on the same side can also improve the convenience of assembly. When a plurality of energy storage containers are arranged, sides of the battery compartments of two adjacent energy storage containers may also be placed abutting each other to reduce the footprint of the arrangement of the plurality of energy storage containers, so as to improve the energy storage density per unit area. Thus, for the energy storage container according to the embodiments of the present application, the layout mode in which the electrical compartment and the liquid cooling unit are located on the same side of the battery compartment is more reasonable.

In some embodiments, the electrical compartment and the liquid cooling unit are arranged along a second direction, the second direction being perpendicular to the first direction.

By adopting the above technical solution, on the basis that the electrical compartment and the liquid cooling unit are arranged on the same side of the battery compartment, the electrical compartment and the liquid cooling unit are also arranged along the second direction. Thus, the working personnel can simultaneously observe and operate the electrical compartment and the liquid cooling unit at the end side of the energy storage container, thereby effectively improving the convenience of maintenance and repair of the electrical compartment and the liquid cooling unit.

In some embodiments, the energy storage container further includes a battery cluster and a main control box; the battery cluster is arranged in the battery compartment along the first direction, the main control box is disposed on one side of the battery cluster in a third direction, and the battery cluster is electrically connected to the main control box, where the first direction, the second direction, and the third direction are all perpendicular to each other.

By adopting the above technical solution, providing the battery cluster can reduce the internal connecting structures and improve the consistency of the system; additionally, the main control box is disposed on one side of the battery cluster in the third direction, thereby reasonably utilizing the space within the battery compartment, and improving the space utilization rate and maintainability within the battery compartment.

In some embodiments, the battery cluster includes at least two batteries electrically connected to each other, and a plurality of the batteries of the battery cluster are sequentially arranged along the third direction.

By adopting the above technical solution, the at least two batteries in the battery cluster may be sequentially arranged along the third direction, such that in the case where a plurality of battery clusters are arranged along the first direction, according to the arrangement mode of the batteries, the space within the battery compartment is reasonably utilized, thereby improving the space utilization rate within the battery compartment, and further improving the energy storage density of the energy storage container.

In some embodiments, a number of the battery clusters is four, and each of the battery clusters includes eight batteries.

By adopting the above technical solution, four battery clusters are arranged along the first direction in the battery compartment, and each battery cluster includes eight batteries arranged along the second direction. In this case, the space utilization rate in the battery compartment is optimized, and as a result, the energy storage density of the energy storage container in this case is also relatively optimized.

In some embodiments, a length of the battery compartment in the first direction is L, a length of the battery in the first direction is X, and a number of the battery clusters is A, where 0.7 ≤ (AX)/L ≤ 0.95.

By adopting the above technical solution, setting the ratio of the sum AX of the lengths of the batteries arranged along the first direction to the length L of the battery compartment in the first direction to be greater than or equal to 0.7 and less than or equal to 0.95 can enable the sum of the lengths of the batteries arranged along the first direction to have a sufficient proportion relative to the length of the battery compartment, thereby improving the energy density of the energy storage container.

In some embodiments, 0.8 ≤ (AX)/L ≤ 0.92.

By adopting the above technical solution, the proportion of the sum AX of the lengths of the batteries arranged along the first direction to the length L of the battery compartment in the first direction can be further optimized, thereby further optimizing the energy density of the energy storage container.

In some embodiments, a width of the battery compartment in the second direction is M, and a width of the battery in the second direction is Y, where 0.7 ≤ Y/M ≤ 0.99.

By adopting the above technical solution, setting the ratio of the width Y of the battery in the second direction to the width of the battery compartment in the second direction to be greater than or equal to 0.7 and less than or equal to 0.99 can enable the width of the battery in the second direction to have a sufficient proportion relative to the width of the battery compartment, thereby improving the energy density of the energy storage container.

In some embodiments, 0.8 ≤ Y/M ≤ 0.99.

By adopting the above technical solution, the proportion of the width Y of the battery in the second direction to the width M of the battery compartment in the second direction can be further optimized, thereby further optimizing the energy density of the energy storage container.

In some embodiments, a height of the battery compartment in the third direction is N, a height of the battery in the third direction is Z, and a number of batteries in each of the battery clusters is B, where 0.55 ≤ (BZ)/N ≤ 0.9.

By adopting the above technical solution, setting the ratio of the sum BY of the heights of the batteries arranged along the third direction to the height N of the battery compartment in the third direction to be greater than or equal to 0.55 and less than or equal to 0.9 can enable the sum of the heights of the batteries arranged along the third direction to have a sufficient proportion relative to the height of the battery compartment, thereby improving the energy density of the energy storage container.

In some embodiments, 0.75 ≤ (BZ)/N ≤ 0.85.

By adopting the above technical solution, the proportion of the height N of the battery in the third direction to the height N of the battery compartment in the third direction can be further optimized, thereby further optimizing the energy density of the energy storage container.

In some embodiments, a length of the container body in the first direction is H, and a length of the battery compartment in the first direction is L, where 0.6 ≤ L/H ≤ 0.95.

By adopting the above technical solution, setting the ratio of the length L of the battery compartment in the first direction to the length H of the container body in the first direction to be greater than or equal to 0.6 and less than or equal to 0.95 can enable the battery compartment to have a sufficient proportion relative to the container body, such that the battery compartment has sufficient space to accommodate the batteries, thereby improving the energy density of the energy storage container.

In some embodiments, 0.75 ≤ L/H ≤ 0.9.

By adopting the above technical solution, the spatial proportion of the battery compartment in the container body can be further optimized to further optimize the accommodating capacity of the battery compartment for the batteries, thereby achieving the optimization of the energy density of the energy storage container.

In some embodiments, a length of the container body in the first direction is H, and a length of the electrical compartment in the first direction is D, where 0.08 ≤ D/H ≤ 0.35.

By adopting the above technical solution, setting the ratio of the length D of the electrical compartment in the first direction to the length H of the container body in the first direction to be greater than or equal to 0.08 and less than or equal to 0.35 to limit the proportion of the electrical compartment to the length H of the container body in the first direction can reduce the spatial impact on the battery compartment, and optimize the energy density of the energy storage container.

In some embodiments, 0.1 ≤ D/H ≤ 0.2.

By adopting the above technical solution, the spatial proportion of the electrical compartment in the container body can be further optimized, to further reduce the impact of the electrical compartment on the space of the battery compartment, thereby achieving the optimization of the energy density of the energy storage container.

In some embodiments, the battery includes a battery cell, and the battery cell satisfies at least:

a length of the battery cell in the first direction is E, and a number of the battery cells arranged along the first direction in the battery compartment is I, where E ≥ 240 mm, and 16 ≤ I ≤ 22; a length of the battery compartment in the first direction is L, and 0.55 ≤ (EI)/L ≤ 0.95;

and/or, a width of the battery cell in the second direction is F, and a number of the battery cells arranged along the second direction in the battery compartment is J, where F ≥ 60 mm, and 26 ≤ J ≤ 35; a width of the battery compartment in the second direction is M, and 0.55 ≤ (FJ)/M ≤ 0.95;

and/or, a height of the battery cell in the third direction is G, and a number of the battery cells arranged along the third direction in the battery compartment is K, where G ≥ 180 mm, and 6 ≤ K ≤ 9; a height of the battery compartment in the third direction is N, and 0.55 ≤ (GK)/N ≤ 0.95.

By adopting the above technical solution, the energy density in the battery compartment can be improved by limiting the external dimensions of the battery cell and limiting the number of battery cells arranged in the first direction, the second direction, and/or the third direction.

In some embodiments, 0.75 ≤ (EI)/L ≤ 0.88; and/or, 0.75 ≤ (FJ)/M ≤ 0.88; and/or, 0.6 ≤ (GK)/N ≤ 0.8.

By adopting the above technical solution, the energy density in the battery compartment is further improved by further limiting the dimensions of the battery cell in the battery compartment.

In some embodiments, one side of the container body in the second direction is provided with a battery compartment door closing the battery compartment, and an opposite side of the container body in the second direction forms a closed structure; one side of the container body in the first direction is provided with an electrical compartment door closing the electrical compartment, and an opposite side of the container body in the first direction forms a closed structure.

By adopting the above technical solution, among peripheral side surfaces of the container body, two intersecting side surfaces are provided with door opening structures, and the other two intersecting side surfaces are not provided with door structures but form closed structures. Thus, the side surfaces of the container body without door structures may be placed close to other container bodies, thereby forming a 2x2 grid arrangement of four container bodies.

In some embodiments, the electrical compartment includes at least one of a power distribution box, a master control box, a fire protection control module, a fire protection pipeline, an explosion-proof fan, and a busbar.

By adopting the above technical solution, at least one of the power distribution box, the master control box, the fire protection control module, the fire protection pipeline, the explosion-proof fan, and the busbar can be accommodated in the electrical compartment, thereby achieving a compact arrangement.

In some embodiments, the fire protection control module is disposed on the electrical compartment door.

By adopting the above technical solution, the fire protection control module is disposed on the electrical compartment door, such that the spatial arrangement in the electrical compartment can be improved, thereby effectively improving the degree of compactness in the electrical compartment.

In some embodiments, an air outlet of the explosion-proof fan is disposed on the electrical compartment door; in the second direction, an air inlet of the explosion-proof fan is disposed on a side, facing away from the electrical compartment door, of the battery compartment door, and the air inlet of the explosion-proof fan is located at a lower side in the third direction.

By adopting the above technical solution, the air outlet of the explosion-proof fan is disposed on the electrical compartment door, and the air inlet of the explosion-proof fan is disposed on the battery compartment door, thereby enabling the air inlet and the air outlet of the explosion-proof fan to be separated from each other.

In a second aspect, the embodiments of the present application further provide an energy storage system. The energy storage system includes the energy storage container described above.

The beneficial effects of the embodiments of the present application are as follows: The energy storage system according to the embodiments of the present application includes the energy storage container described above. Based on the high space utilization rate of the energy storage container, the energy storage system also possesses a high space utilization rate, and therefore, the energy storage density is also improved.

In some embodiments, two energy storage containers are arranged along the first direction to form a container group; battery compartments of the two energy storage containers in the container group are disposed adjacent to each other, and battery compartment doors of the two energy storage containers are located on a same side.

By adopting the above technical solution, two energy storage containers are arranged to form a container group, and battery compartments of the two energy storage containers may be disposed adjacent to each other, thereby improving the energy density per unit footprint area.

In some embodiments, a number of the container groups is two, the two container groups are sequentially arranged along a second direction, and the two container groups are distributed in a mirrored manner, where the second direction is perpendicular to the first direction, the first direction is a length direction of the container body, and the second direction is a width direction of the container body.

By adopting the above technical solution, the two container groups are arranged along the second direction and distributed in a mirrored manner. Thus, the four energy storage containers may form a 2x2 grid arrangement, and battery compartments of the four energy storage containers are all located in the middle, such that the energy density per unit footprint area can be further improved. In addition, sequentially arranging the two container groups can reduce the distance between the two container groups to reduce the maintenance distance for the two container groups, thereby improving the convenience of on-site operations.

In some embodiments, the electrical compartments of two of the energy storage containers arranged along the second direction are disposed adjacent to each other.

By adopting the above technical solution, the electrical compartments of the two energy storage containers can be simultaneously observed and maintained on the same side, thereby effectively improving the convenience of maintenance.

### BRIEF DESCRIPTION OF THE DRAWINGS

To more clearly illustrate the technical solutions in the embodiments of the present application, the drawings required for illustrating the embodiments or description of the related art are briefly described below. Apparently, the drawings in the following description illustrate merely some embodiments of the present application, and those of ordinary skill in the art may still derive other drawings from these drawings without creative efforts.
FIG. 1 is a schematic structural diagram of an energy storage container according to an embodiment of the present application;
FIG. 2 is a side view of an energy storage container according to an embodiment of the present application;
FIG. 3 is a schematic diagram of an internal structure of an energy storage container according to an embodiment of the present application;
FIG. 4 is a front view of an internal structure of an energy storage container according to an embodiment of the present application;
FIG. 5 is a top view of an internal structure of an energy storage container according to an embodiment of the present application;
FIG. 6 is a schematic structural diagram of a battery according to an embodiment of the present application;
FIG. 7 is a schematic structural diagram of a battery cell according to an embodiment of the present application;
FIG. 8 is a schematic structural diagram of an energy storage system according to an embodiment of the present application; and
FIG. 9 is a schematic diagram of an internal structure of an electrical compartment according to an embodiment of the present application.

Reference numerals in the drawings have the following meanings:
1000, energy storage system; 1100, container group; 100, energy storage container;
10, container body; 20, battery compartment; 21, battery compartment door; 30, electrical compartment; 31, electrical compartment door; 32, power distribution box; 33, fire protection control module; 34, busbar; 40, liquid cooling unit; 50, battery cluster;
51, battery; 510, battery case; 511, first part; 512, second part; 520, battery cell;
60, main control box; 70, air inlet; 80, air outlet; 90, partition wall;
O, first direction; P, second direction; Q, third direction.

### DETAILED DESCRIPTION

Embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present application. They should not be construed as limiting the present application.

In the description of the present application, it should be understood that the orientations or positional relationships indicated by the terms "length", "width", "upper", "lower", "front", "rear", "left", "right", "vertical", "horizontal", "top", "bottom", "inner", "outer", and the like are those shown based on the drawing. These terms are only intended to facilitate the description of the present application and simplify the description rather than indicate or imply that the device or element referred to must have a specific orientation or must be constructed and operated in a specific orientation, and thus, should not be construed as limiting the present application.

In addition, the terms "first" and "second" are used for description only and are not to be construed as indicating or implying relative importance or to implicitly indicate the number of technical features indicated. Therefore, a feature defined with "first" or "second" may explicitly or implicitly include one or more such features. In the description of the present application, "plurality" refers to two or more, unless otherwise explicitly and specifically defined.

In the present application, unless otherwise explicitly specified and defined, the terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the present application can be understood based on specific conditions.

With the continuous development of new energy technologies, various technologies related to energy storage are also continuously upgrading; among the various technologies, energy storage containers using a container as an energy storage method have been widely applied. The energy storage container includes a container body and various module devices accommodated in the container body, such as energy storage modules (e.g., battery clusters, batteries, and battery cells), liquid cooling devices, fire protection devices, power distribution modules, and signal and power supply module boxes. In consideration of the transportation of the energy storage container, the container body is generally configured as a standard-size container; therefore, the standard-size energy storage container is subject to size limitations, and how to reasonably lay out the internal space of the energy storage container is particularly crucial.

In the related art, the space for accommodating the energy storage modules in the container body and the space for accommodating other modules are generally cross-distributed; for example, the liquid cooling device and the fire protection device are integrated into the space for accommodating the energy storage modules. Since the various module devices and the like are integrated into the same space, the arrangement of circuits, pipelines, and the like in the same space will affect the use of the space. Therefore, in this case, the space utilization rate in the container body is relatively low, the energy storage density will also be affected, and meanwhile, separate maintenance of the various module devices is not facilitated. Alternatively, the liquid cooling device, the fire protection device, and other various module devices are respectively located at two opposite end sides of the space for accommodating energy storage units. In this case, if the number of energy storage containers is plural, the plurality of energy storage containers cannot be arranged adjacent to and abutting against each other; otherwise, maintenance operations for the various module devices will be affected. As a result, the footprint area of the plurality of energy storage containers is larger, and the energy storage density per unit area will also decrease.

Based on the above considerations, in order to address the issue regarding the reasonableness of the internal layout of the energy storage container, an energy storage container is designed. An electrical compartment and a liquid cooling unit are arranged on the same side of a battery compartment in a first direction; that is, the electrical compartment and the liquid cooling unit are separated from the battery compartment and independently arranged, such that the space utilization rate of the container can be effectively improved, and when a plurality of energy storage containers are arranged, the battery compartment sides of two adjacent energy storage containers can also be placed to abut against each other, thereby reducing the footprint of the arrangement of the plurality of energy storage containers and improving the energy storage density per unit area.

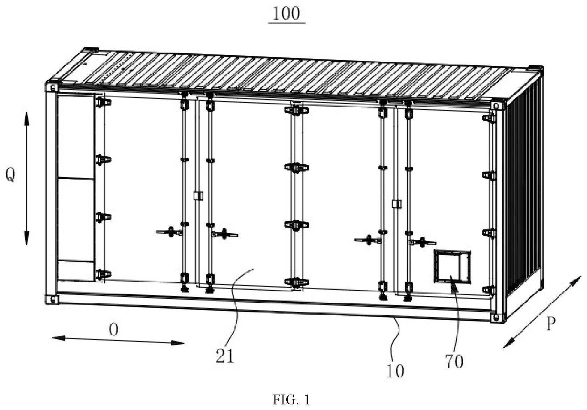

Referring to FIGs. 1, 2, and 5, in a first aspect, the embodiments of the present application provide an energy storage container 100. The energy storage container includes a container body 10. A battery compartment 20, an electrical compartment 30, and a liquid cooling unit 40 are disposed inside the container body 10; the electrical compartment 30 and the liquid cooling unit 40 are disposed on the same end side of the battery compartment 20 in a first direction O.

The container body 10 is the container main body structure of the energy storage container 100, and the container body 10 is of a standard container size. The interior of the container body 10 forms a cavity to allow the battery compartment 20, the electrical compartment 30, the liquid cooling unit 40, and other module devices to be arranged in the container body 10.

It should be understood that the container body 10, serving as a container, may be a rectangular parallelepiped structure. For ease of description, in the embodiments of the present application, three directions are defined based on the rectangular parallelepiped container, where a length direction of the container body 10 may be defined as the first direction O, a width direction of the container body 10 may be defined as a second direction P, and a height direction of the container body 10 may be defined as a third direction Q. Thus, in the embodiments of the present application, the electrical compartment 30 and the liquid cooling unit 40 are disposed on the same side of the battery compartment 20 in the first direction O; that is, the electrical compartment 30 and the liquid cooling unit 40 may be arranged on the same side of the battery compartment 20 in the length direction of the container body 10.

The battery compartment 20 is configured to accommodate an energy storage module, for example, a battery cell, a battery formed of battery cells, or a battery cluster formed by connecting batteries in series. Taking the battery cluster as an example, the battery compartment 20 may accommodate one battery cluster or a plurality of battery clusters. In the case where a plurality of battery clusters are provided, the battery clusters are arranged along the first direction O in the battery compartment 20.

Optionally, the battery compartment 20 may be constructed within the container body 10 using structures such as a partition plate, a mounting beam, and a bracket. The battery compartment 20, presenting an independent space, is built by using the structures such as the partition plate, the mounting beam, and the bracket, for arranging the battery cluster and the like.

The electrical compartment 30 is configured to accommodate an electrical device. For example, the electrical compartment 30 may accommodate components including, but not limited to, a power distribution box, a master control box, a fire protection control module, a fire protection pipeline, and a fan. Optionally, the electrical compartment 30 may be constructed within the container body 10 using structures such as a partition plate, a mounting beam, and a bracket. The electrical compartment 30, presenting an independent space, is built by using the structures such as the partition plate, the mounting beam, and the bracket, for arranging the electrical device and the like.

The liquid cooling unit 40 is a cooling device configured to provide a circulating coolant liquid into the battery compartment 20. The liquid cooling unit 40 may be directly accommodated inside the container body 10 and disposed adjacent to the battery compartment 20. Alternatively, a liquid cooling compartment, presenting an independent space, may be built within the container body 10 by using structures such as a partition plate, a mounting beam, and a bracket, for accommodating the liquid cooling unit 40. The liquid cooling unit 40 may be a unit using a cooling medium such as cooling water, cooling oil, or a refrigerant. Optionally, a water cooling unit may be selected as the liquid cooling unit 40 to perform cooling by using the cooling water.

The electrical compartment 30 and the liquid cooling unit 40 are disposed on the same end side of the battery compartment 20 in the first direction O. Optionally, a compartment door of the electrical compartment 30 and an operating end face of the liquid cooling unit 40 may both be located at an end portion of the container body 10 and exposed outside the container body 10, thereby allowing an operator to perform operation and maintenance on the electrical compartment 30 and the liquid cooling unit 40 on the same side outside the container body 10.

In the energy storage container 100 according to the embodiments of the present application, the electrical compartment 30 and the liquid cooling unit 40 are disposed on the same end side of the battery compartment 20 in the first direction O, such that the space utilization rate of the container can be effectively improved. Additionally, working personnel can inspect the electrical compartment 30 and the liquid cooling unit 40 on the same end side of the energy storage container 100, thereby effectively improving the convenience of on-site maintenance. Moreover, when mounting and configuring the energy storage container 100, the layout mode in which the electrical compartment 30 and the liquid cooling unit 40 are located on the same side can also improve the convenience of assembly. When a plurality of energy storage containers 100 are arranged, sides of the battery compartments 20 of two adjacent energy storage containers 100 may also be placed abutting each other to reduce the footprint of the arrangement of the plurality of energy storage containers 100, so as to improve the energy storage density per unit area. Thus, for the energy storage container 100 according to the embodiments of the present application, the layout mode in which the electrical compartment 30 and the liquid cooling unit 40 are located on the same side of the battery compartment 20 is more reasonable.

Referring to FIGs. 1, 2, and 5, in some embodiments, the electrical compartment 30 and the liquid cooling unit 40 are arranged along a second direction P, and the second direction P is perpendicular to the first direction O.

It can be understood that the first direction O may be the length direction of the container body 10, and thus, the second direction P may be the width direction of the container body 10.

The electrical compartment 30 and the liquid cooling unit 40 are located on the same side of the battery compartment 20 in the first direction O; that is, the electrical compartment 30 and the liquid cooling unit 40 are on one end side of the container body 10 in the length direction.

On this basis, the electrical compartment 30 and the liquid cooling unit 40 are also arranged in the second direction P; that is, the electrical compartment 30 and the liquid cooling unit 40 are arranged in the width direction of the container body 10. Thus, the electrical compartment 30 and the liquid cooling unit 40 are located on one end side of the container body 10 in the length direction, and the electrical compartment 30 and the liquid cooling unit 40 are sequentially arranged at the end side of the container body 10 and along the width direction of the container body 10. Thus, the working personnel can simultaneously perform maintenance and repair on the electrical compartment 30 and the liquid cooling unit 40 at the end portion of the container body 10, thereby effectively improving the convenience of maintenance.

Optionally, a compartment door is formed on the electrical compartment 30 in the first direction O and on a side facing the outside of the container body 10; a fire protection control module, or control buttons, display panels, and the like of other modules may be mounted on the compartment door of the electrical compartment 30 to fully utilize the space within the electrical compartment 30, improve the space utilization rate of the electrical compartment 30, and thus reduce the proportion of the entire electrical compartment 30 in the container body 10, thereby enabling the battery compartment 20 to occupy a larger proportion of the container body 10 to achieve the objective of increasing the energy storage density.

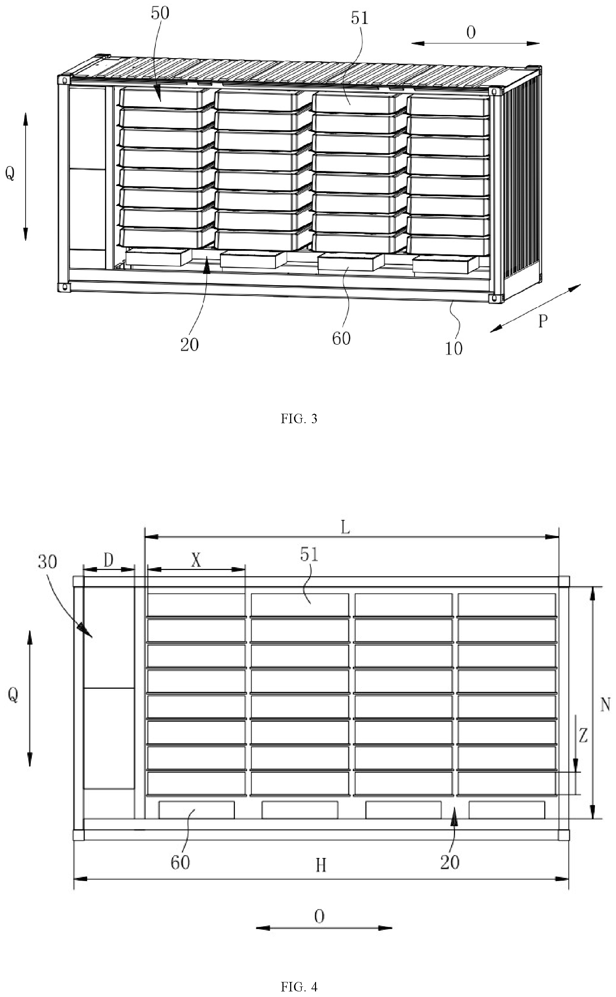

Referring to FIGs. 3 to 5, in some embodiments, a battery cluster 50 and a main control box 60 are further included. The battery cluster 50 is arranged in the battery compartment 20 along the first direction O, the main control box 60 is disposed on one side of the battery cluster 50 in a third direction Q, and the battery cluster 50 is electrically connected to the main control box 60. The first direction O, the second direction P, and the third direction Q are all perpendicular to each other.

The battery cluster 50 refers to a battery system formed by combining a plurality of batteries or battery cells into a group to work together under certain conditions. The battery cluster 50 can improve the reliability, stability, and service life of an entire system by means of mutual collaboration among the batteries or the battery cells. Adopting the design of the battery cluster 50, compared with a non-cluster design, can improve the consistency of the system and reduce connecting structures among the battery cells, thereby improving the overall discharge capacity.

The number of clusters of the battery cluster 50 may be one or any number greater than one. In the case where the number of clusters of the battery cluster 50 is plural, the plurality of battery clusters 50 may be sequentially arranged in the battery compartment 20 along the first direction O, that is, the length direction of the container body 10.

The main control box 60 is configured to be electrically connected to the battery cluster 50. For example, the main control box performs communication networking with the battery cluster 50 via a CAN (Controller Area Network) to achieve the electrical control over the battery cluster 50. A main control box 60 is provided on one side of each battery cluster 50 in the third direction Q; that is, each battery cluster 50 is provided with one main control box 60 for individual control over the battery cluster, so as to improve the controllability.

The main control box 60 is disposed on one side of the battery cluster 50 in the third direction Q. It can be understood that the third direction Q may be the height direction of the container body 10. Thus, the main control box 60 may be disposed above or below a corresponding battery cluster 50 in the height direction of the container body 10, so as to reasonably utilize the space within the battery compartment 20 and reduce the influence on arranging the battery clusters 50 along the first direction O. Optionally, the main control box 60 may be disposed below the battery cluster 50 in the height direction of the container body 10, such that the main control box 60 is mounted at a lower position, thereby facilitating the maintenance of the main control box.

With such an arrangement, providing the battery cluster 50 can reduce the internal connecting structures and improve the consistency of the system; additionally, the main control box 60 is disposed on one side of the battery cluster 50 in the third direction Q, thereby reasonably utilizing the space within the battery compartment 20, and improving the space utilization rate and maintainability within the battery compartment 20.

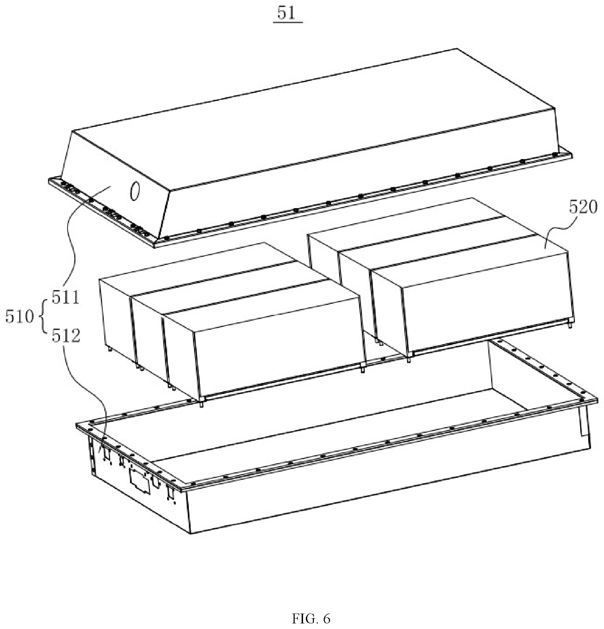

Referring to FIGs. 3 to 6, in some embodiments, the battery cluster 50 includes at least two electrically connected batteries 51, and the plurality of batteries 51 of the battery cluster 50 are sequentially arranged along the third direction Q.

The battery 51 is configured to store electrical energy; the battery 51 mentioned in the present application may include a battery module, a battery pack, or the like. Illustratively, taking the battery 51 including a battery pack as an example, the battery 51 includes a battery case 510 and a battery cell 520, and the battery cell 520 is accommodated in the battery case 510. The battery case 510 is configured to provide an accommodating space for the battery cell 520, and the battery case 510 may be in various structures. In some embodiments, the battery case 510 may include a first part 511 and a second part 512. The first part 511 and the second part 512 cover each other, and the first part 511 and the second part 512 jointly define the accommodating space for accommodating the battery cell 520. The battery case 510 formed by the first part 511 and the second part 512 may have various shapes, such as a cylinder and a rectangular parallelepiped.

The plurality of batteries 51 in the battery cluster 50 may be connected in series or in parallel, or the plurality of batteries 51 may be connected by means of a combination of series and parallel connections.

The battery cluster 50 includes at least two batteries 51, such that the at least two batteries 51 can be sequentially arranged in the third direction Q; that is, the batteries 51 are sequentially arranged in the height direction of the container body 10. Optionally, a support frame may be provided within the battery compartment 20, such that the batteries 51 can be supported and placed on the support frame. Illustratively, when the battery 51 cluster 50 includes eight batteries 51, eight support frames are mounted in a spaced manner within the battery compartment 20 along the height direction of the container body 10, and the batteries 51 are separately assembled on a corresponding support frame; when the number of battery clusters 50 is four, the support frames are arranged in a spaced manner in four vertical columns along the length direction of the container body 10, and each vertical column includes eight support frames spaced apart from each other along the height direction, whereby each vertical column of support frames is configured to assemble eight batteries 51 in one battery cluster 50, and the four vertical columns of support frames can assemble the batteries 51 in the four battery clusters 50.

In some embodiments, the main control box 60 corresponding to each battery cluster 50 is separately disposed at one end of the battery cluster 50 in the third direction Q; that is, the main control box 60 and the plurality of batteries 51 are arranged along the third direction Q, and the main control box 60 is located at one end of the plurality of batteries 51 in the third direction Q. Optionally, the main control box 60 may be located at a bottom of the plurality of batteries 51 in the height direction of the container body 10.

With such an arrangement, the at least two batteries 51 in the battery cluster 50 may be sequentially arranged along the third direction Q, such that in the case where a plurality of battery clusters 50 are arranged along the first direction O, according to the arrangement mode of the batteries 51, the space within the battery compartment 20 is reasonably utilized, thereby improving the space utilization rate within the battery compartment 20, and further improving the energy storage density of the energy storage container 100.

Referring to FIGs. 3 to 5, in some embodiments, the number of battery clusters 50 is four, and each battery cluster 50 includes eight batteries 51.

It can be understood that in the case where the number of battery clusters 50 is four and each battery cluster 50 includes eight batteries 51, the batteries 51 are arranged along the first direction O to form four vertical columns and arranged along the third direction Q to form eight horizontal rows within the battery compartment 20. With such an arrangement, in the case where the batteries 51 are arranged in the mode of four vertical columns and eight horizontal rows, the space utilization rate within the battery compartment 20 is optimized, and as a result, the energy storage density of the energy storage container 100 in this case is also relatively optimized.

Referring to FIGs. 3 and 4, in some embodiments, the length of the battery compartment 20 in the first direction O is L, the length of the battery 51 in the first direction O is X, and the number of battery clusters 50 is A, where 0.7 ≤ (AX)/L ≤ 0.95.

It can be understood that the battery clusters 50 are arranged along the first direction O, and the batteries 51 within the battery cluster 50 are arranged along the third direction Q; the first direction O is perpendicular to the third direction Q. Thus, the number of the battery clusters 50 is the number of the batteries 51 arranged along the first direction O, and a product of the number A of the battery clusters 50 and the length X of the battery 51 in the first direction O is a sum of the lengths of the batteries 51 arranged along the first direction O. The number A of the battery clusters 50 is a positive integer, such as 1, 2, 3, 4, or 5.

A ratio of the sum AX of the lengths of the batteries 51 arranged along the first direction O to the length L of the battery compartment 20 in the first direction O is a proportion of the sum of the lengths of the batteries 51 arranged along the first direction O to the length of the battery compartment 20 in the first direction O.

Optionally, the proportion (AX)/L of the sum of the lengths of the batteries 51 arranged along the first direction O to the length of the battery compartment 20 in the first direction O is optionally 0.7, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, etc.

With such an arrangement, setting the ratio of the sum AX of the lengths of the batteries 51 arranged along the first direction O to the length L of the battery compartment 20 in the first direction O to be greater than or equal to 0.7 and less than or equal to 0.95 can enable the sum of the lengths of the batteries 51 arranged along the first direction O to have a sufficient proportion relative to the length of the battery compartment 20, thereby improving the energy density of the energy storage container 100.

Referring to FIGs. 3 and 4, in some embodiments, 0.8 ≤ (AX)/L ≤ 0.92.

Optionally, the proportion (AX)/L of the sum of the lengths of the batteries 51 arranged along the first direction O to the length of the battery compartment 20 in the first direction O is optionally 0.80, 0.81, 0.82, 0.83, 0.84, 0.85, 0.86, 0.87, 0.88, 0.89, 0.90, 0.91, 0.92, etc.

It can be understood that, to further optimize the proportion of the batteries 51 to the battery compartment 20 in the length direction, the ratio of the sum AX of the lengths of the batteries 51 arranged along the first direction O to the length L of the battery compartment 20 in the first direction O can be further limited to be greater than or equal to 0.8 and less than or equal to 0.92, such that the proportion of the sum AX of the lengths of the batteries 51 arranged along the first direction O to the length L of the battery compartment 20 in the first direction O can be further optimized, thereby further optimizing the energy density of the energy storage container 100.

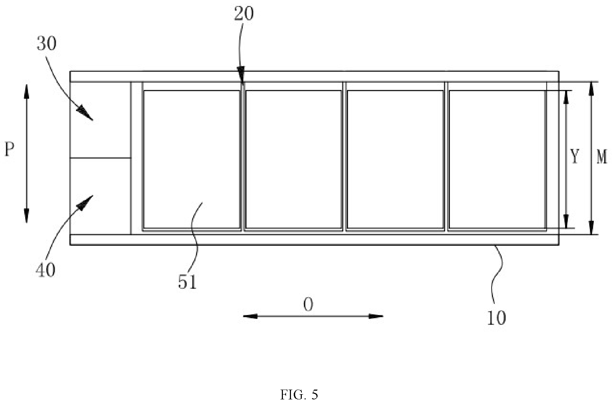

Referring to FIGs. 3 and 5, in some embodiments, the width of the battery compartment 20 in the second direction P is M, and the width of the battery 51 in the second direction P is Y, where 0.7 ≤ Y/M ≤ 0.99.

It can be understood that a ratio of the width Y of the battery 51 in the second direction P to the width M of the battery compartment 20 in the second direction P is a proportion of the width of the battery 51 in the second direction P to the width of the battery compartment 20 in the second direction P.

Optionally, the proportion Y/M of the width of the battery 51 in the second direction P to the width of the battery compartment 20 in the second direction P is optionally 0.7, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, etc.

With such an arrangement, setting the ratio of the width Y of the battery 51 in the second direction P to the width of the battery compartment 20 in the second direction P to be greater than or equal to 0.7 and less than or equal to 0.99 can enable the width of the battery 51 in the second direction P to have a sufficient proportion relative to the width of the battery compartment 20, thereby improving the energy density of the energy storage container 100.

Referring to FIGS. 3 and 5, in some embodiments, 0.8 ≤ Y/M ≤ 0.99.

Optionally, the proportion Y/M of the width of the battery 51 in the second direction P to the width of the battery compartment 20 in the second direction P is optionally 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, etc.

It can be understood that, to further optimize the proportion of the battery 51 to the battery compartment 20 in the width direction, the ratio of the width Y of the battery 51 in the second direction P to the width of the battery compartment 20 in the second direction P can be set to be greater than or equal to 0.8 and less than or equal to 0.99, such that the proportion of the width Y of the battery 51 in the second direction P to the width M of the battery compartment 20 in the second direction P can be further optimized, thereby further optimizing the energy density of the energy storage container 100.

Referring to FIGs. 3 to 5, in some embodiments, the height of the battery compartment 20 in the third direction Q is N, the height of the battery 51 in the third direction Q is Z, and the number of batteries 51 within each battery cluster 50 is B, where 0.55 ≤ (BZ)/N ≤ 0.9.

It can be understood that the batteries 51 within the battery clusters 50 are arranged along the third direction Q, and thus, a product of the number B of the batteries 51 within each battery cluster 50 and the height Z of the battery 51 in the third direction Q is a sum of the heights of the batteries 51 arranged along the third direction Q. The number B of the batteries 51 within each battery cluster 50 is a positive integer, such as 1, 2, 3, 4, or 5.

A ratio of the sum BZ of the heights of the batteries 51 arranged along the third direction Q to the height N of the battery compartment 20 in the third direction Q is a proportion of the sum of the heights of the batteries 51 arranged along the third direction Q to the height of the battery compartment 20 in the third direction Q.

Optionally, the proportion (BZ)/N of the sum of the heights of the batteries 51 arranged along the third direction Q to the height of the battery compartment 20 in the third direction Q is optionally 0.55, 0.56, 0.57, 0.58, 0.59, 0.60, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, etc.

With such an arrangement, setting the ratio of the sum BY of the heights of the batteries 51 arranged along the third direction Q to the height N of the battery compartment 20 in the third direction Q to be greater than or equal to 0.55 and less than or equal to 0.9 can enable the sum of the heights of the batteries 51 arranged along the third direction Q to have a sufficient proportion relative to the height of the battery compartment 20, thereby improving the energy density of the energy storage container 100.

Referring to FIGs. 3 to 5, in some embodiments, 0.75 ≤ (BZ)/N ≤ 0.85.

Optionally, the proportion (BZ)/N of the sum of the heights of the batteries 51 arranged along the third direction Q to the height of the battery compartment 20 in the third direction Q is optionally 0.75, 0.76, 0.77, 0.78, 0.79, 0.80, 0.81, 0.82, 0.83, 0.84, 0.85, etc.

It can be understood that, to further optimize the proportion of the batteries 51 to the battery compartment 20 in the height direction, the ratio of the sum BY of the heights of the batteries 51 arranged along the third direction Q to the height N of the battery compartment 20 in the third direction Q can be further limited to be greater than or equal to 0.75 and less than or equal to 0.85, such that the proportion of the sum BY of the heights of the batteries 51 arranged along the third direction Q to the height N of the battery compartment 20 in the third direction Q can be further optimized, thereby further optimizing the energy density of the energy storage container 100.

Referring to FIGs. 1, 3, and 4, in some embodiments, the length of the container body 10 in the first direction O is H, and the length of the battery compartment 20 in the first direction O is L, where 0.6 ≤ L/H ≤ 0.95.

It can be understood that a ratio of the length L of the battery compartment 20 in the first direction O to the length H of the container body 10 in the first direction O is a proportion of the battery compartment 20 to the container body 10 in the first direction O.

Optionally, the proportion L/H of the battery compartment 20 to the container body 10 in the first direction O is optionally 0.60, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, etc.

With such an arrangement, setting the ratio of the length L of the battery compartment 20 in the first direction O to the length H of the container body 10 in the first direction O to be greater than or equal to 0.6 and less than or equal to 0.95 can enable the battery compartment 20 to have a sufficient proportion relative to the container body 10, such that the battery compartment 20 has sufficient space to accommodate the batteries 51, thereby improving the energy density of the energy storage container 100.

Referring to FIGs. 1, 3, and 4, in some embodiments, 0.75 ≤ L/H ≤ 0.9.

Optionally, the proportion L/H of the battery compartment 20 to the container body 10 in the first direction O is optionally 0.75, 0.76, 0.77, 0.78, 0.79, 0.80, 0.81, 0.82, 0.83, 0.84, 0.85, 0.86, 0.87, 0.88, 0.89, 0.90, etc.

It can be understood that, to further optimize the proportion of the battery compartment 20 to the container body 10 in the first direction O, the ratio of the length L of the battery compartment 20 in the first direction O to the length H of the container body 10 in the first direction O can be further limited to be greater than or equal to 0.75 and less than or equal to 0.9, such that the spatial proportion of the battery compartment 20 in the container body 10 can be further optimized to further optimize the accommodating capacity of the battery compartment 20 for the batteries 51, thereby achieving the optimization of the energy density of the energy storage container 100.

Referring to FIGs. 1, 3, and 4, in some embodiments, the length of the container body 10 in the first direction O is H, and the length of the electrical compartment 30 in the first direction O is D, where 0.08 ≤ D/H ≤ 0.35.

It can be understood that a ratio of the length D of the electrical compartment 30 in the first direction O to the length H of the container body 10 in the first direction O is a proportion of the electrical compartment 30 to the container body 10 in the first direction O. The liquid cooling unit 40 and the electrical compartment 30 are arranged along the second direction P; therefore, the proportion of the electrical compartment 30 to the container body 10 in the first direction O may be considered as a combined proportion of the liquid cooling unit 40 and the electrical compartment 30 to the container body 10 in the first direction O.

Optionally, the proportion D/H of the electrical compartment 30 to the container body 10 in the first direction O is optionally 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, etc.

With such an arrangement, setting the ratio of the length D of the electrical compartment 30 in the first direction O to the length H of the container body 10 in the first direction O to be greater than or equal to 0.08 and less than or equal to 0.35 to limit a proportion of the electrical compartment 30 to the length H of the container body 10 in the first direction O can reduce the spatial impact on the battery compartment 20, and optimize the energy density of the energy storage container 100.

Referring to FIGs. 1, 3, and 4, in some embodiments, 0.1 ≤ D/H ≤ 0.2.

Optionally, the proportion D/H of the electrical compartment 30 relative to the container body 10 in the first direction O is optionally 0.10, 0.11, 0.12, 0.13, 0.14, 0.15, 0.16, 0.17, 0.18, 0.19, 0.20, etc.

It can be understood that, to further optimize the proportion of the electrical compartment 30 to the container body 10 in the first direction O, the ratio of the length D of the electrical compartment 30 in the first direction O to the length H of the container body 10 in the first direction O can be further limited to be greater than or equal to 0.1 and less than or equal to 0.2, such that the spatial proportion of the electrical compartment 30 in the container body 10 can be further optimized, to further reduce the impact of the electrical compartment 30 on the space of the battery compartment 20, thereby achieving the optimization of the energy density of the energy storage container 100.

Referring to FIGs. 3, 4, 6, and 7, in some embodiments, the battery 51 includes a battery cell 520; the battery cell 520 satisfies at least:
a length of the battery cell 520 in the first direction is E, and a number of battery cells 520 arranged along the first direction O in the battery compartment 20 is I, where E ≥ 240 mm (millimeters, replaced by mm hereinafter), and 16 ≤ I ≤ 22; a length of the battery compartment 20 in the first direction O is L, and 0.55 ≤ (EI)/L ≤ 0.95;
and/or, a width of the battery cell 520 in the second direction P is F, and a number of battery cells 520 arranged along the second direction P in the battery compartment 20 is J, where F ≥ 60 mm, and 26 ≤ J ≤ 35; a width of the battery compartment 20 in the second direction P is M, and 0.55 ≤ (FJ)/M ≤ 0.95;
and/or, a height of the battery cell 520 in the third direction Q is G, and a number of battery cells 520 arranged along the third direction Q in the battery compartment 20 is K, where G ≥ 180 mm, and 6 ≤ K ≤ 9; a height of the battery compartment 20 in the third direction Q is N, and 0.55 ≤ (GK)/N ≤ 0.95.

It can be understood that, to optimize the energy density in the container body 10, the length E of the battery cell in the battery 51 in the first direction O, and/or the width F in the second direction P, and/or the height G in the third direction Q can be limited. For example, the length E of the battery cell 520 in the first direction O is limited to E ≥ 240 mm, and the number of battery cells 520 arranged along the first direction O in the battery compartment 20 is between 16 and 22; and/or, the width of the battery cell 520 in the second direction P is limited to F ≥ 60 mm, and the number of battery cells 520 arranged along the second direction P in the battery compartment 20 is between 26 and 35; and/or, the height of the battery cell 520 in the third direction Q is limited to G ≥ 180 mm, and the number of battery cells 520 arranged along the third direction Q in the battery compartment 20 is between 6 and 9.

In addition, proportions of the arrangements of the battery cells 520 in the first direction O, the second direction P, and the third direction Q relative to the battery compartment 20 in the first direction O, the second direction P, and the third direction Q are limited, respectively. For example, in the first direction O, the proportion is limited such that 0.55 ≤ (EI)/L ≤ 0.95; in the second direction P, the proportion is limited such that 0.55 ≤ (FJ)/M ≤ 0.95; and in the third direction Q, the proportion is limited such that 0.55 ≤ (GK)/N ≤ 0.95.

With such an arrangement, the energy density in the battery compartment 20 can be improved by limiting the external dimensions of the battery cell 520 and limiting the number of battery cells 520 arranged in the first direction O, the second direction P, and/or the third direction Q.

Referring to FIGs. 3, 4, 6, and 7, in some embodiments, 0.75 ≤ (EI)/L ≤ 0.88; and/or, 0.75 ≤ (FJ)/M ≤ 0.88; and/or, 0.6 ≤ (GK)/N ≤ 0.8.

With such an arrangement, the energy density in the battery compartment 20 is further improved by further limiting the dimensions of the battery cell 520 in the battery compartment 20.

Illustratively, the volume proportion of the battery cells 520 in the battery compartment 20 may also be limited. For example, a volume of the battery compartment 20 may be set to U, a volume of a single battery cell 520 may be set to V, and a total number of battery cells 520 in the battery compartment 20 is W. Thus, a proportion of a volume of all battery cells 520 to the volume of the battery compartment 20 may be limited to 0.55 ≤ VW/U ≤ 0.95, and preferably, 0.75 ≤ VW/U ≤ 0.85.

Referring to FIGs. 1 to 3, one side of the container body 10 in the second direction P is provided with a battery compartment door 21 closing the battery compartment 20, and an opposite side of the container body 10 in the second direction P forms a closed structure. One side of the container body 10 in the first direction O is provided with an electrical compartment door 31 closing the electrical compartment 30, and an opposite side of the container body 10 in the first direction O forms a closed structure.

The battery compartment door 21 may be provided on the container body 10. Optionally, the battery compartment door 21 may be rotatably connected to the container body 10 by means of a hinge, a butt hinge, or the like, and may be locked to the container body 10 by means of a door lock.

Optionally, the number of battery compartment doors 21 may be at least two; for example, there may be four battery compartment doors 21. The at least two battery compartment doors 21 are arranged on the container body 10 along the first direction O and are jointly used to open or close the battery compartment 20, so as to achieve the operation and maintenance in the battery compartment 20.

With such an arrangement, among peripheral side surfaces of the container body 10, two intersecting side surfaces are provided with door opening structures, and the other two intersecting side surfaces are not provided with door structures. Thus, the side surfaces of the container body 10 without door structures may be placed close to other container bodies 10, thereby forming a 2x2 grid arrangement of four container bodies 10.

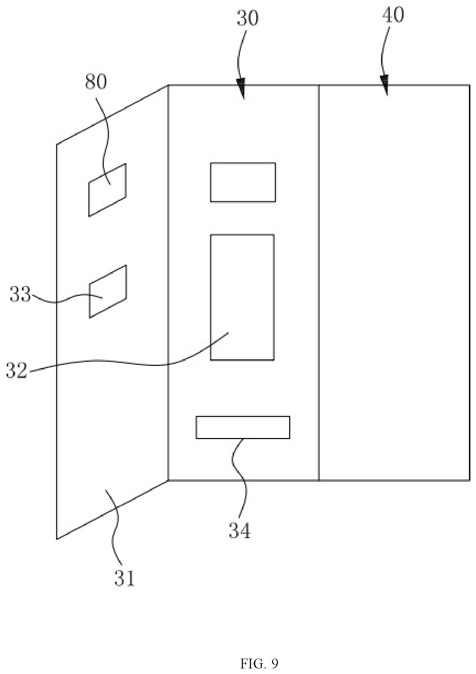

Referring to FIG. 9, in some embodiments, the electrical compartment 30 includes at least one of a power distribution box 32, a master control box (not shown in the figure), a fire protection control module 33, a fire protection pipeline (not shown in the figure), an explosion-proof fan (not shown in the figure), and a busbar 34.

With such an arrangement, at least one of the power distribution box 32, the master control box, the fire protection control module 33, the fire protection pipeline, the explosion-proof fan, and the busbar 34 can be accommodated in the electrical compartment 30, thereby achieving a compact arrangement.

Referring to FIGs. 1, 2, and 9, in some embodiments, the fire protection control module 33 is disposed on the electrical compartment door 31.

With such an arrangement, the fire protection control module 33 is disposed on the electrical compartment door 31, such that the spatial arrangement in the electrical compartment 30 can be improved, thereby effectively improving the degree of compactness in the electrical compartment 30.

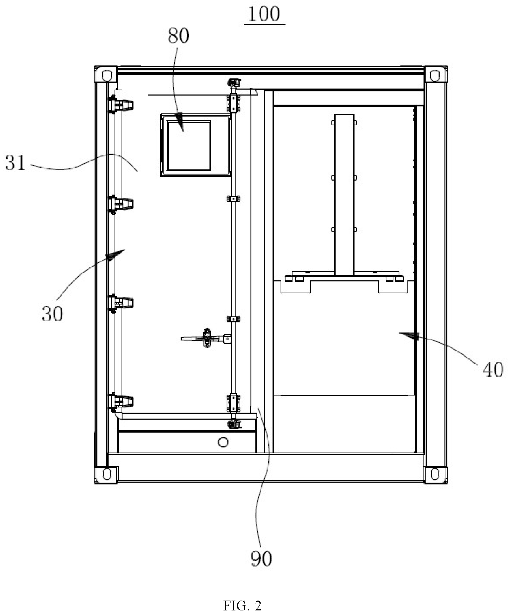

Referring to FIGs. 1 and 2, in some embodiments, an air outlet 80 of the explosion-proof fan is disposed on the electrical compartment door 31; in the second direction P, an air inlet 70 of the explosion-proof fan is disposed on a side, facing away from the electrical compartment door 31, of the battery compartment door 21, and the air inlet 70 of the explosion-proof fan is located on a lower side in the third direction Q.

It can be understood that the third direction Q may be a direction of gravity in a working state. Thus, the air inlet 70 of the explosion-proof fan being located on the lower side in the third direction Q refers to the air inlet 70 of the explosion-proof fan being located in a region below the electrical compartment door 31 in the direction of gravity.

Optionally, the air inlet 70 of the explosion-proof fan is closed by a baffle plate; the air outlet 80 of the explosion-proof fan is closed by a baffle plate.

A partition wall 90 is provided between the electrical compartment 30 and the battery compartment 20, and the partition wall 90 is provided with a ventilation opening. The explosion-proof fan further includes an exhaust fan and a closed air duct that are provided in the electrical compartment 30. The air duct communicates the battery compartment 20 and the air outlet 80 through the ventilation opening, such that thermal runaway gas of the battery 51 is quickly discharged out of the energy storage container 100.

With such an arrangement, the air outlet 80 of the explosion-proof fan is disposed on the electrical compartment door 31, and the air inlet 70 of the explosion-proof fan is disposed on the battery compartment door 21, thereby enabling the air inlet 70 and the air outlet 80 of the explosion-proof fan to be separated from each other.

Illustratively, in some specific embodiments, the energy storage container 100 includes a container body 10. A battery compartment 20, and an electrical compartment 30 and a liquid cooling unit 40 disposed on the same side of the battery compartment 20 along the first direction O are disposed inside the container body 10. The liquid cooling unit 40 is sequentially distributed along the second direction P. Four battery clusters 50 sequentially arranged along the first direction O are accommodated in the battery compartment 20. Each battery cluster 50 includes eight batteries 51 arranged along the third direction Q. In addition, a main control box 60 is provided at a bottom of each battery cluster 50 in the third direction Q. According to the above arrangement mode, the space utilization of the energy storage container 100 is more reasonable, and the working personnel can inspect the electrical compartment 30 and the liquid cooling unit 40 on the same end side of the energy storage container 100, thereby effectively improving the convenience of on-site maintenance. During the mounting and configuration of the energy storage container 100, the layout mode in which the electrical compartment 30 and the liquid cooling unit 40 are located on the same side can also improve the convenience of assembly. When a plurality of energy storage containers 100 are arranged, sides of the battery compartments 20 of two adjacent energy storage containers 100 may also be placed abutting against each other to reduce the footprint of the arrangement of the plurality of energy storage containers 100, so as to improve the energy storage density per unit area.

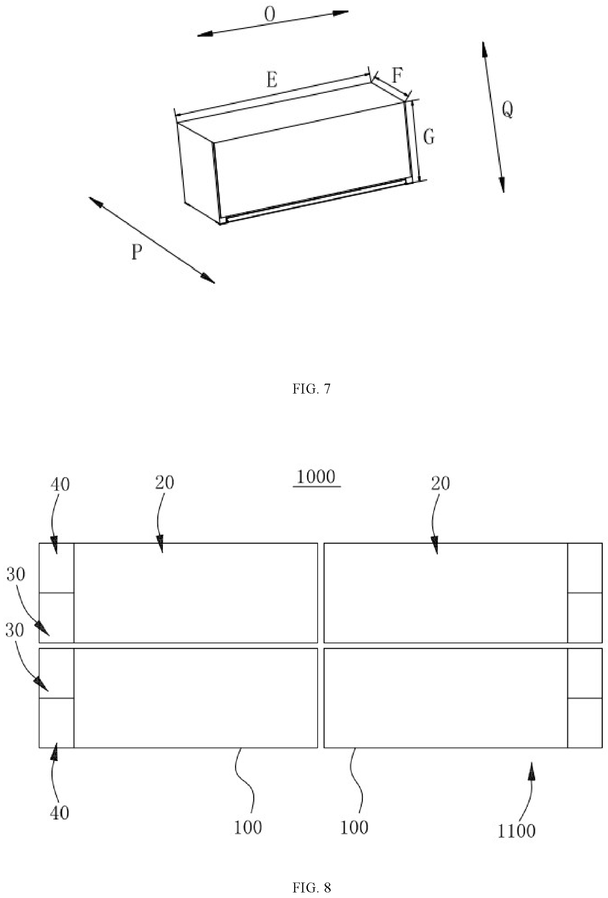

Referring to FIGs. 1 and 8, in a second aspect, the embodiments of the present application further provide an energy storage system 1000. The energy storage system includes the energy storage container 100 described above. The energy storage system 1000 according to the embodiments of the present application includes the energy storage container 100 described above. Based on the high space utilization rate of the energy storage container 100, the energy storage system 1000 also possesses a high space utilization rate, and therefore, the energy storage density is also improved.

Referring to FIGs. 1 and 8, in some embodiments, two energy storage containers 100 are arranged along the first direction O to form a container group 1100. The battery compartments 20 of the two energy storage containers 100 within the container group 1100 are disposed adjacent to each other, and the battery compartment doors 21 of the two energy storage containers 100 within the container group 1100 are located on the same side.

It can be understood that the two energy storage containers 100 are arranged along the first direction O, that is, arranged along the length direction of the container bodies 10 to form a row. The battery compartments 20 of the two energy storage containers 100 may be disposed adjacent to each other, in which case the electrical compartments 30 of the two energy storage containers 100 within the container group 1100 face away from each other. That is, the container bodies 10 of the two energy storage containers 100 may be placed close to each other along the first direction O, and the two energy storage containers 100 are mirror-symmetrical. Thus, the battery compartments 20 of the two energy storage containers 100 may be adjacent to each other, and the electrical compartments 30 and the liquid cooling units 40 of the two energy storage containers 100 are located at two opposite ends in the first direction O, respectively.

With such a layout, compared with the mode in which the two energy storage containers 100 need to be spaced apart from each other, due to the structural design in which the electrical compartment 30 and the liquid cooling unit 40 are located on the same end side of the battery compartment 20, the two energy storage containers 100 can be placed close to each other and arranged in a row. This effectively reduces the total footprint area of the two energy storage containers 100, and therefore, the energy density per unit footprint area can be improved. Additionally, since the electrical compartments 30 and the liquid cooling units 40 of the two energy storage containers 100 are both located at end portions, maintenance operations will not be affected, and the convenience degree of on-site operations can also be improved; that is, it is only necessary to operate the battery compartments 20 of the two energy storage containers 100 on the same side of the container bodies 10.

Referring to FIGs. 1 and 8, in some embodiments, the number of container groups 1100 is two. The two container groups 1100 are sequentially arranged along a second direction P, and the two container groups 1100 are distributed in a mirrored manner. The second direction P is perpendicular to a first direction O, the first direction O is a length direction of the container body 10, and the second direction P is a width direction of the container body 10.

It can be understood that the width direction of the container body 10 of the energy storage container 100 described above may be parallel to the second direction P. Additionally, the length direction of the container body 10 of the energy storage container 100 may be parallel to the first direction O, and a height direction of the container body 10 of the energy storage container 100 may be parallel to a third direction Q. The two container groups 1100 are sequentially arranged along the second direction P of the energy storage container 100; that is, the two container groups 1100 are arranged along the width direction of the container body 10. In this case, a total of four energy storage containers 100 in the two container groups 1100 form a 2x2 grid arrangement. The two energy storage containers 100 in the same container group 1100 are placed close to each other along the first direction O, and the two energy storage containers 100 are mirror-symmetrical. The containers in the two container groups 1100 are placed back-to-back; that is, the two energy storage containers 100 of one of the container groups 1100 and the two energy storage containers 100 of the other container group 1100 are each placed close to each other in a back-to-back manner, and the two container groups 1100 are distributed in a mirrored manner.

With such an arrangement, the two container groups 1100 are arranged along the second direction P and distributed in a mirrored manner. Thus, the four energy storage containers 100 may be placed close to each other to form a 2x2 grid arrangement, and compared with the mode in which the four energy storage containers 100 are placed in a spaced manner, the energy density per unit footprint area can be further improved. In addition, sequentially arranging the two container groups 1100 can reduce the distance between the two container groups 1100 to reduce the maintenance distance for the two container groups 1100, thereby improving the convenience of on-site operations.

Referring to FIGs. 1 and 8, in some embodiments, the electrical compartments 30 of the two energy storage containers 100 arranged along the second direction P are disposed adjacent to each other.

With such an arrangement, the electrical compartments 30 of the two energy storage containers 100 can be simultaneously observed and maintained on the same side in the second direction P, thereby effectively improving the convenience of maintenance.

The above are only preferred embodiments of the present application, and are not intended to limit the present application. Any modification, equivalent substitution, improvement, and the like made within the spirit and principle of the present application shall all fall within the protection scope of the present application.

## Claims

1. An energy storage container, comprising: a container body, wherein a battery compartment, an electrical compartment, and a liquid cooling unit are disposed inside the container body; the electrical compartment and the liquid cooling unit are disposed on a same end side of the battery compartment in a first direction.

2. The energy storage container according to claim 1, wherein the electrical compartment and the liquid cooling unit are arranged along a second direction, the second direction being perpendicular to the first direction.

3. The energy storage container according to claim 2, wherein the energy storage container further comprises a battery cluster and a main control box; the battery cluster is arranged in the battery compartment along the first direction, the main control box is disposed on one side of the battery cluster in a third direction, and the battery cluster is electrically connected to the main control box, wherein the first direction, the second direction, and the third direction are all perpendicular to each other.

4. The energy storage container according to claim 3, wherein the battery cluster comprises at least two batteries electrically connected to each other, and a plurality of the batteries of the battery cluster are sequentially arranged along the third direction.

5. The energy storage container according to claim 4, wherein a number of the battery clusters is four, and each of the battery clusters comprises eight of the batteries.

6. The energy storage container according to claim 4 or 5, wherein a length of the battery compartment in the first direction is L, a length of the battery in the first direction is X, and a number of the battery clusters is A, wherein 0.7 ≤ (AX)/L ≤ 0.95.

7. The energy storage container according to claim 6, wherein 0.8 ≤ (AX)/L ≤ 0.92.

8. The energy storage container according to any one of claims 4 to 7, wherein a width of the battery compartment in the second direction is M, and a width of the battery in the second direction is Y, wherein 0.7 ≤ Y/M ≤ 0.99.

9. The energy storage container according to claim 8, wherein 0.8 ≤ Y/M ≤ 0.99.

10. The energy storage container according to any one of claims 4 to 9, wherein a height of the battery compartment in the third direction is N, a height of the battery in the third direction is Z, and a number of batteries in each of the battery clusters is B, wherein 0.55 ≤ (BZ)/N ≤ 0.9.

11. The energy storage container according to claim 10, wherein$0.75 \leq \left(BZ\right) / N \leq 0.85 .$

12. The energy storage container according to any one of claims 1 to 11, wherein a length of the container body in the first direction is H, and a length of the battery compartment in the first direction is L, wherein 0.6 ≤ L/H ≤ 0.95.

13. The energy storage container according to claim 12, wherein 0.75 ≤ L/H ≤ 0.9.

14. The energy storage container according to any one of claims 1 to 13, wherein a length of the container body in the first direction is H, and a length of the electrical compartment in the first direction is D, wherein 0.08 ≤ D/H ≤ 0.35.

15. The energy storage container according to claim 14, wherein 0.1 ≤ D/H ≤ 0.2.

16. The energy storage container according to claim 4 or 5, wherein the battery comprises a battery cell, and the battery cell satisfies at least:
a length of the battery cell in the first direction is E, and a number of the battery cells arranged along the first direction in the battery compartment is I, wherein E ≥ 240 mm, and 16 ≤ I ≤ 22; a length of the battery compartment in the first direction is L, and 0.55 ≤ (EI)/L ≤ 0.95;
and/or, a width of the battery cell in the second direction is F, and a number of the battery cells arranged along the second direction in the battery compartment is J, wherein F ≥ 60 mm, and 26 ≤ J ≤ 35; a width of the battery compartment in the second direction is M, and 0.55 ≤ (FJ)/M ≤ 0.95;
and/or, a height of the battery cell in the third direction is G, and a number of the battery cells arranged along the third direction in the battery compartment is K, wherein G ≥ 180 mm, and 6 ≤ K ≤ 9; a height of the battery compartment in the third direction is N, and 0.55 ≤ (GK)/N ≤ 0.95.

17. The energy storage container according to claim 16, wherein 0.75 ≤ (EI)/L ≤ 0.88; and/or, 0.75 ≤ (FJ)/M ≤ 0.88; and/or, 0.6 ≤ (GK)/N ≤ 0.8.

18. The energy storage container according to any one of claims 1 to 17, wherein one side of the container body in the second direction is provided with a battery compartment door closing the battery compartment, and an opposite side of the container body in the second direction forms a closed structure; one side of the container body in the first direction is provided with an electrical compartment door closing the electrical compartment, and an opposite side of the container body in the first direction forms a closed structure.

19. The energy storage container according to claim 18, wherein the electrical compartment comprises at least one of a power distribution box, a master control box, a fire protection control module, a fire protection pipeline, an explosion-proof fan, and a busbar.

20. The energy storage container according to claim 19, wherein the fire protection control module is disposed on the electrical compartment door.

21. The energy storage container according to claim 19, wherein an air outlet of the explosion-proof fan is disposed on the electrical compartment door; in the second direction, an air inlet of the explosion-proof fan is disposed on a side, facing away from the electrical compartment door, of the battery compartment door, and the air inlet of the explosion-proof fan is located at a lower side in the third direction.

22. An energy storage system, comprising the energy storage container according to any one of claims 1 to 21.

23. The energy storage system according to claim 22, wherein two of the energy storage containers are arranged along the first direction to form a container group; battery compartments of the two energy storage containers in the container group are disposed adjacent to each other, and battery compartment doors of the two energy storage containers are located on a same side.

24. The energy storage system according to claim 23, wherein a number of the container groups is two, the two container groups are sequentially arranged along a second direction, and the two container groups are distributed in a mirrored manner, wherein the second direction is perpendicular to the first direction, the first direction is a length direction of the container body, and the second direction is a width direction of the container body.

25. The energy storage system according to claim 24, wherein the electrical compartments of two of the energy storage containers arranged along the second direction are disposed adjacent to each other.
